# EUROPEAN PATENT APPLICATION

(11) **EP 2 712 896 A1**
(43) Date of publication of application: **02.04.2014**
(21) Application number: 12186759.2
(22) Date of filing: 01.10.2012
(51) Int. Cl.: C09D 5/14, C09D 5/16, C09D 7/00, C09D 7/12, A01N 25/26

(54) **Insecticidal Paints**

(71) Applicant: Akzo Nobel Coatings International B.V., 6824 BM Arnhem (NL)
(72) Inventor: Kang, Kai, 201600 Shanghai (CN); Lu, Junbiao, 201600 Shanghai (CN); McLoughlin, Daragh, 201600 Shanghai (CN); Olsen, Jörgen H, DK-2770 Kastrup (DK)
(74) Representative: Akzo Nobel IP Department

(57) **Abstract**

A one pack aqueous insecticidal architectural coating composition comprising an aqueous dispersion of polymer particles as binder and further comprising, based on the total liquid paint formulation,
i) from 0.1 to 4.0wt% insecticide
ii) from 0.5 to 6.5wt% dibasic ester solvent

wherein the insecticide is located in the polymer particles and the polymer particles are film forming at ambient temperatures.

## Description

The present invention is concerned with aqueous, insecticidal architectural paints and to a method of producing them and to a new use of dibasic ester solvents.

Architectural paints containing insecticides used to coat walls, floors and ceilings inside buildings are known. Such insecticidal paints kill insects usually by contact. Many of the known paints are solventborne, that is to say, the majority, if not all of the carrier liquid is organic solvent. This is largely because insecticides are complicated organic molecules that do not readily dissolve in aqueous paints, particularly at the low VOC (volatile organic content) level demanded by legislation and consumers throughout the world.

The Weatherall Company Inc discloses a dispersion (known as BugJuice®) containing 4.75% of the insecticide Deltamethrin on its webpage www.weatherall.com/1053BugJuice.html,. The dispersion can be added to any oil or latex based paint. However, once added, the paint must be used within three hours otherwise the insecticide becomes ineffective. Of necessity therefore, this is a two pack system. So, not only is the dispersion inconvenient to use but the paint must be used within a short time or be disposed of. Furthermore, users of architectural paints prefer not to have to mix in additives to a paint as it is often difficult to achieve a homogenous mixture. This is particularly so when adding materials to thixotropic latex paints as it requires the user to break down the thixotropy first by vigorous stirring and after adding the material, wait for the thixotropy to build-up again in order to achieve the correct rheology characteristics so that the paint may be applied to achieve the best finish. In addition the process of making the insecticide dispersion is complicated and will contain surfactants that can degrade the film properties of the dried paint coating such as water resistance. A one pack composition, where the insecticide is incorporated into the paint during manufacture and is stable for many months, is therefore, desirable.

Furthermore, we have found that some insecticides are hydrolytically unstable and become ineffective in aqueous media after a very short time.

One pack insecticidal paints are known. Such paints are disclosed in WO2006/070183 and comprise insecticide encapsulated by thin layers of crosslinked polymer. The capsules are formed from highly crosslinked polyurea or crosslinked aminoplast resins and require complex and expensive processes to produce. Such crosslinked polymers do not film form.

For convenience, the term polymer is used in this specification to include homopolymers and copolymers.

Thus, there is a need for a simple composition and process that provides a one pack ready for use insecticidal architectural paint composition that can be stored for extended periods of up to 12 months.

We have now found a way of making low VOC aqueous insecticidal architectural paints by a simple method and without the need of insecticide encapsulated in crosslinked polymer.

Accordingly, the present invention provides a one pack aqueous insecticidal architectural coating composition comprising an aqueous dispersion of polymer particles as binder and further comprising, based on the total liquid paint formulation,
i) from 0.10 to 4wt% insecticide
ii) from 0.5 to 6.5wt% dibasic ester solvent
wherein the insecticide is located in the polymer particles and the polymer particles are film forming at ambient temperatures.

In another aspect of the invention there is provided a process of making the one pack aqueous insecticidal architectural coating composition of the present invention comprising the steps of
i) making a solution of insecticide of at least 30wt% by dissolving the insecticide in a dibasic ester solvent
ii) adding a sufficient amount of the solution to provide from 0.1 to 4.0wt% of the insecticide to a paint, calculated on the liquid paint formulation, comprising an aqueous dispersion of polymer particles
iii) stirring the resultant mixture for a sufficient time to allow the pesticide to migrate to the polymer particles.

Preferably the coating composition is a gloss paint having a gloss of from 55 to 90% when measured at 20° or a silk paint having a gloss of from 30 to 45% when measured at 60° or eggshell paint having gloss of from 15 to 30% when measured at 60° or matt paint having a gloss of from 0 to 10% when measured at 85° using a glossmeter.

Preferably, the insecticide solution contains from 30 to 80wt% insecticide, more preferably from 40 to 70wt%, even more preferably from 45 to 65wt% and most preferably from 40 to 60wt%. Preferably, the insecticide can be dissolved at the aforementioned concentrations at temperature below 60°C, more preferably below 45°C, even more preferably below 35 °C and most preferably from 15°C to 35°C. This allows solutions of more volatile insecticides, such as chlorpyriphos, to be made in the dibasic ester solvent without the need for complicated condenser equipment to be fitted to mixing vessels.

For a 50wt% insecticide solution, the amount of solution added to the paint is approximately from 10 to 65 g per litre of paint.

Following addition of the insecticide solution to the paint the resulting mixture should be stirred, preferably using high shear, for example as provided by a Heidolph RZR 2041 fitted with a paddle stirrer operating at 50-1000rpm, for at least 5 minutes.

Without wishing to be bound by this, it is thought that following addition of the insecticide solution the insecticide, and probably the dibasic ester, migrates to the polymer particles, where, isolated from the aqueous phase, it does not suffer hydrolysis. In fact, we have made dilute aqueous solutions of Bifenthrin (0.0895ppm at pH 11.0) in accordance with EPA Fate, Transport and Transformation Test Guidelines OPPT 835.2130 Hydrolysis as a Function of pH and Temperature. After 5 hours at 25°C only 45% of the insecticide could be detected in the solution and after 15 hours only 12% remained. Adding 220ppm of polymer particles in the form of a 55% solids vinyl acetate-ethylene copolymer latex (Tg 10°C) to the same solution of insecticide reduced the degradation significantly with 95% of the Bifenthrin remaining after 5 hours and 93% after 15 hours 93%.

The polymer particles are preferably non-crosslinked as such particles tend to be poor film formers.

Preferably the particles film form at ambient temperatures from -15 to 50°C, more preferably from -10 to 45°C, even more preferably from 0 to 40°C and most preferably from 0 to 30°C.

The mean size of the particles is preferably up to 10µm, more preferably from 0.01 to 5.0 µm, even more preferably from 0.05 to 2.5 µm, still more preferably from 0.05 to 1.0 µm and most preferably from 0.05 to 0.5 µm.

The polymer particles can comprise any polymer or copolymer composition so long as they film form at the temperatures hereinbefore described. Useful (co)polymers include the acrylics, styrene-acrylics, vinyls including vinyl acetates, vinyl acetate-ethylene copolymers and polyurethanes. The polymer particles may be made by any known emulsion polymerisation methods including mini-emulsion techniques, conventional emulsion polymerisation methods. The particles may have core-shell architecture where the composition of the core differs from the shell or have a uniform composition throughout.

Preferably the polymer particles containing the insecticide comprise at least 60wt% of the film forming resin, more preferably 75wt%, even more preferably at least 90wt% and most preferably all of the film forming resin. This is preferred as it provides a more even distribution of the insecticide in the paint.

Suitable examples of insecticides for use in the present invention include the organophosphates, organochlorines, pyrroles, pyrethroids and mixtures thereof. Suitable examples of these insecticide classes include cyfluthrin, chlorfenapyr, chlorpyriphos, cypermethrin, bifenthrin, etophenprox, bendiocarb, propoxadur and mixtures thereof. Most preferred is bifenthrin

The dibasic ester solvents comprise di-esters of succinic, glutaric and adipic acids. Readily available diesters include the methyl esters and iso-butyl esters. The di-methyl esters are preferred because they have reduced odour and are thus more pleasant to use, especially in confined and/or poorly ventilated spaces.

The di-basic ester solvents are available as single di-basic esters, for example di-methyl glutarate or as mixtures, for example consisting of the succinate, glutarate and the adipate esters. Where the di-basic ester solvent is a mixture of the esters, it is preferred that the mixture comprises at least 50 to 70wt%, more preferably 55 to 65wt% of the glutarate, more preferably the dimethy glutarate.

Preferably the dibasic esters are methyl esters; more preferably they are mixtures of dimethyl succinate, dimethyl glutarate and dimethyl adipate.

Di-methyl esters of succinic, glutaric and adipic acid solvents are available singly or as mixtures from Cytec under the trademark Santosol®.

Di-isobutyl esters of succinic, glutaric and adipic acid are available as a mixture (15 to 25%, 55 to 65% and 10 to 25% by weight respectively) from Dow under the trademark Coasol®. The di-isobutyl esters, such as Coasol®, are preferred as they have a boiling range of from 274 to 289°C which is above the 250°C upper limit that in some jurisdictions means they are not volatile organic compounds.

Preferably the liquid paint composition comprises 1 to 3.25wt% of insecticide, more preferably from 1.2 to 2.5wt%.

In another aspect of the invention there is provided a surface coated with the coating composition of the invention or a coating composition as made by the process of the invention. More preferably, the surface is a wall, ceiling or floor.

In another aspect of the invention there is provided a new use of dibasic ester solvent to dissolve an insecticide at a concentration of at least 30wt% and which is added to a paint composition comprising aqueous dispersion of polymer particles which are film forming at ambient temperatures and transports the insecticide into the polymer particles. Preferably, the insecticide solution contains from 30 to 80wt% insecticide, more preferably from 40 to 70wt%, even more preferably from 45 to 65wt% and most preferably from 40 to 60wt%.

The invention will now be illustrated by the following examples.

The following materials were used in the examples
Collins DBE is a dibasic ester solvent and is a mixture of 15-25% dimethyl succinate, 55-65% dimethyl glutarate and 10-20% dimethyl adipate available from Shanghai Collins Chemical Company through their agent Gaoxinsh at http://www.gaoxinsh.com.
Bindoplast is a matt paint available from AkzoNobel, based on a vinyl acetate-ethylene copolymer, pH of 7.99, solids content is 54.2 wt%, the pigment volume content (PVC) is 62.8%, contains 7.8wt % of titanium dioxide and 43.7wt% pigment.
Maxilite is a matt paint available from AkzoNobel, based on styrene-acrylic copolymer, pH of 8.56, solids content is 48wt% , PVC is 80.0%, contains 2.24% of titanium dioxide, 44.54 wt% pigment

### Preparation of insecticide solutions

### Insecticide Solution A of Cyfluthrin in DBE

A solution of insecticide was prepared by dissolving 5 grams of Cyfluthrin in 5g of Collins dibutyl ester solvent in 40ml glass container, whilst stirring at ambient temperature. Stirring continued for about 5 minutes or until the insecticide had dissolved. This produced a 50wt% solids solution of Cyfluthrin.

### Insecticide solutions B-F

Using the same method as in Insecticidal solution A a further 5 solutions were prepared using the insecticides indicated below in the amounts shown. Five grams of the dibasic ester was used in each case.

### Insecticide Solution B

2.14g Chlorfenapyr to give a 30% solids solution.

### Insecticide Solution C

5.00g Chlorpyriphos to give a 50% solids solution.

### Insecticide Solution D

5.00g Cypermethrin to give a 50% solids solution.

### Insecticide Solution E

2.50g Bifenthrin to give a 33.3% solids solution.

### Insecticide Solution F

5.00g Etophenprox to give a 50% solids solution.

### Paints

### Paints containing the insecticide solutions A-F were prepared according to the following method

### Paint 1.

To a 200ml plastic container fitted with a Heidolph RZR 2041 paddle stirrer was added 97g of Bindoplast paint; to this was added 0.9798g of the insecticide solution A whilst stirring at 1000rpm for 30 minutes. The final paint contained 0.5wt% of the insecticide calculated on the weight of paint.

### Paints 2 - 5

The same procedure was followed as for Paint 1 using the following amounts of the respective insecticide solution.

Paint 2 - 1.9796g of insecticide solution C was added producing a final paint containing 1% of insecticide.

Paint 3 - 1.9796g of insecticide solution D was added producing a final paint containing 1% of insecticide.

Paint 4 - 1.4923g of insecticide solution E was added producing a final paint containing 0.51 % of insecticide.

### Paints 5 - 9

Further paints containing insecticide solution A - F were prepared using Maxilite paint. The same procedure as in Paint examples 1-4 was used other than 97g of Maxilite paint was used in each case.

Paint 5 - 0.9798 of insecticide solution A was added producing a final paint containing 0.5% of insecticide.

Paint 6 - 3.3448g of insecticide solution B was added producing a final paint containing 1.0% of insecticide.

Paint 7 - 1.9796g of insecticide solution C was added producing a final paint containing 1.0% of insecticide.

Paint 8 - 1.9796g of insecticide solution D was added producing a final paint containing 1.0% of insecticide.

Paint 9 - 1.4923g of insecticide solution E was added producing a final paint containing 0.5% of insecticide.

Paint 10 - 4.0417g of insecticide solution F was added producing a final paint containing 2.0% of insecticide.

### Paint Testing

Paint films were prepared on black Lenata panels using a 200 micron spreader. The films were allowed to air dry at ambient temperature and humidity.

### Testing of dried paint films

### Each paint film was then tested according to WHO Cone Bioassay testing protocol.

For this test two plastic cones were placed over the paint film and 10 non-blood-fed 2 to 5 day old female mosquitoes (Kisumu strain; Anopheles Gambiae) were introduced into each of the cones and exposed for 3 minutes before removal in a 150ml plastic cup provided with sucrose solution. After 24 hours the number of dead mosquitoes was recorded and expressed as a percentage of the total.

Results were as follows:

| Example | Paint type | wt% Insecticide¹ | % Mortality |
|---|---|---|---|
| 1 | Bindoplast | 0.5 Cyfluthrin | 100 |
| 2 | Bindoplast | 1.0 Chlorpyriphos | 100 |
| 3 | Bindoplast | 1.0 Cypermethrin | 64 |
| 4 | Bindoplast | 0.5 Bifenthrin | 100 |
| 5 | Maxilite | 0.5 Cyfluthrin | 57 |
| 6 | Maxilite | 1.0 Chlorfenapyr | 100 |
| 7 | Maxilite | 1.0 Chlorpyriphos | 100 |
| 8 | Maxilite | 1.0 Cypermethrin | 96 |
| 9 | Maxilite | 0.5 Bifenthrin | 100 |
| 10 | Maxilite | 2.0 Etophernox | 92 |

| | | | |
|---|---|---|---|
| ¹ Calculated based on liquid paint | | | |

## Claims

1. A one pack aqueous insecticidal architectural coating composition comprising an aqueous dispersion of polymer particles and further comprising, based on the total liquid paint formulation,
i) from 0.10 to 4wt% insecticide
ii) from 0.5 to 6.5wt% dibasic ester solvent
wherein the insecticide is located in the polymer particles and the polymer particles film form to form a binder at ambient temperatures.

2. An insecticidal coating composition according to claim 1 wherein the polymer particles containing the insecticide comprise from 60 to 100% by weight of the total binder.

3. An insecticidal coating composition according to claim 1 or claim 2 wherein the polymer particles are selected from the group of polymers consisting acrylic, styrene-acrylic, vinyl, vinyl-acetate, vinyl acetate-ethylene and polyurethane.

4. An insecticidal coating composition according to any one of the preceding claims wherein the polymer particles are styrene-acrylic and/or vinyl acetate-ethylene polymer.

5. An insecticidal coating composition according to any one of the preceding claims wherein the polymer particles are not crosslinked.

6. An insecticidal coating composition according to any one of the preceding claims wherein the insecticide comprises from 1 to 3.25wt% based on the liquid paint formulation.

7. An insecticidal coating composition according to any one of the preceding claims wherein the insecticide comprises an organophosphate, organochlorine, pyrrole, pyrethroid or mixtures thereof.

8. A process of making a one pack aqueous insecticidal architectural coating composition according to any one of the preceding claims comprising the steps of
i. making a solution of insecticide of at least 30wt% by dissolving the insecticide in a dibasic ester solvent
ii. adding a sufficient amount of the solution to provide from 0.1 to 4.0wt% of the insecticide to a paint, calculated on the liquid paint formulation, comprising an aqueous dispersion of polymer particles capable of film-forming at ambient temperatures
iii. stirring the resultant mixture for a sufficient time to allow the pesticide to migrate into the polymer particles.

9. A process according to claim 8 wherein the solution of insecticide comprises from 30 to 80wt% of insecticide.

10. A surface coated with a coating composition according to any one of claims 1 to 7.

11. A new use of dibasic ester solvent to dissolve an insecticide at a concentration of at least 30wt% and which is added to a paint composition comprising aqueous dispersion of polymer particles which are film forming at ambient temperatures and transports the insecticide into the polymer particles.
